# EUROPEAN PATENT APPLICATION

(11) **EP 3 064 862 A1**
(43) Date of publication of application: **07.09.2016**
(21) Application number: 16156079.2
(22) Date of filing: 17.02.2016
(51) Int. Cl.: F24J 2/46, F24J 2/50

(54) **SOLAR PANEL AND PRODUCTION METHOD THEREOF**

(30) Priority: 25.02.2015 IT RM20150083; 25.02.2015 CH 2492015
(71) Applicant: Solar-Tec SA, 6967 Dino (CH)
(72) Inventor: ACHERMANN, Alessandro, 6967 Dino (CH); CAPRA, Mauro, 22020 Bizzarone (CH)
(74) Representative: Fiammenghi, Alessandro

(57) **Abstract**

Solar panel (100), comprising a front planar element (110) at least partially transparent, coupled to a second rear concave part (120) realizing a tank suitable for containing a photo converting element (500) suitable for transforming the energy coming from the solar radiation when passing through said front planar element (110) and incising on a sensitive surface of said photo converting element (500), in another form of energy;
said solar panel (100) is characterized in that it comprises a peripheral window (450), at least partially developing along a portion proximal to the perimeter of said front element (110), said peripheral window realizing a means of visualization of correctness and completeness of coupling physical between said rear concave part (120) and said front planar element (110).

The present invention concerns in addition the method of production and mounting of said solar panel.

## Description

### Field of the invention

The present invention concerns the field of the devices of conversion of light in energy and/or heat, and in detail attains to a solar panel.

### Background art

It is known that exist solar panels capable of producing hot water and/or electric current following their irradiation by means of solar rays.

Said solar panels are typically installed in the houses or anyway on buildings in temperated zones or at lower latitudes, where the use of devices suitable for withdrawing energy from the solar illumination is anyway convenient.

In detail, the solar panels are installed on the roofs of the houses, and where the roof has more sides, are installed on the side oriented to South or in the closest cardinal proximity of the South, in such a way to enjoy of the maximum possible solar radiation.

Typically, the solar panels are oriented in such a way to have an inclination so as to be capable of absorbing the maximum amount of solar rays especially in proximity of the midday, a moment of the time where the presence of solar rays is maximum. In said case the solar panel should be theoretically illuminated with solar rays incising with solar rays on the surface thereof, in an orthogonal way; this brings the efficiency thereof to a maximum.

The solar panels of the known type comprise a sheet in material at least partially transparent, arranged frontally, and a tank, mechanically jointed to said sheet, arranged rearward.

According to the present invention, we will refer to "frontally" by indicating those portions of solar panel that are directly exposed to sunlight and "rearwardly" for those portions of solar panel that are not, in contrast, directly exposed to the sunlight, and that in use represent the portions closest to the roof when the solar panel is installed thereon.

Into the tank is a arranged the true and actual convecting element, that transforms the light energy coming from the sun in thermal energy.

The convecting element is typically arranged below the front portion at a distance of about 3-4 centimeters, that can reduce up to 2.

The front portion is jointed to the tank by means of gluing, that shall be complete and clean to the end of avoiding that the environmental impurities can dispose themselves into the tank on the convecting element reducing the efficiency of the solar panel itself.

Anyway the gluing is of a difficult control, in particular in case the front portion is provided with a serigraphed edge.

The applicant has furthermore observed that the incidence of the solar ray on the front portion, in case not being orthogonal respective to this last, can bring to a reduction of the efficiency of the panel itself, in particular where there is a serigraphy.

Since the peripheral serigraphy of the front portion, that typically is realized as a sheet of glass, is due to an aesthetic purpose since it conceals the visibility of the gluing, the problem of the reduction of the efficiency of conversion is significant, in particular for relevant angles of incidence.

The document EP 2 578 322 teaches a solar panel provided with a recess not being covered by a glass into which the glue is deposited, that can extend up to below the glass itself.

The document WO 2009/083273 teaches a thermal solar panel with a plurality of channels for depositing the material glue that serves for retaining a front element of the same.

The scope of the present invention is therefore to describe a solar panel that solves the aforementioned drawbacks.

### Summary of the invention

According to the present invention is therefore realized a solar panel, comprising a front planar element at least partially transparent, coupled to a second concave rear part realizing a tank suitable for containing a photo converting element suitable for transform the energy coming from the solar radiation when passing through said front planar element and incising on a sensitive surface of said photo converting element, in another form of energy; said solar panel is characterized in that it comprises a peripheral window, developing at least partially along a portion to which proximal to the perimeter of said front element, said peripheral window realizing a means of visualization of correctness and completeness of coupling physical between said rear part concave and said front planar element; said second rear part comprises a portion of perimetral edge planar and a recess extending along the perimeter of the said portion of perimetral edge; said recess being filled with a liquid material glue defining a contrast of color with said serigraphed perimetral portion by means of appearing through said perimetral window.

According to an aspect of the present invention, said solar panel is characterized in that said peripheral window is realized into or in proximity of a serigraphed perimetral portion and/or painted and/or covered of said front element.

In a further aspect of the present invention, said peripheral window defines said correctness and completeness of coupling physical between said concave rear part and said planar front element by means of a contrast of color.

In a further aspect of the present invention, said portion of perimetral edge planar is in use arranged on a plane which is parallel to the plane along which lays said front element.

In detail, said recess is arranged to a distance from the edge of the said rear part equal to distance to which said peripheral window is arranged respective to the edge of the front element, said peripheral window resulting superimposed to said recess.

In a further aspect of the present invention, said perimetral portion serigraphed and/or painted and/or covered presents a discontinuous internal profile, realized at least in correspondence of the principal sides of said front element by means of a linear jusxtaposition of a sequence of a first tract convex wherein said serigraphed perimetral portion and/or painted and/or covered extends principally towards an inner zone of said front element and a second tract concave, wherein said serigraphed perimetral portion and/or painted and/or covered extends less towards said inner zone.

In a further aspect of the present invention, said solar panel is characterized in that said serigraphed perimetral serigraphed and/or painted and/or covered portion presents angular portions of linear linking which are inclined respective to the sides of said front element.

According to the present invention is furthermore described a method of production and installation of a solar panel with verification of correct coupling between an own front element and an own rear part; said method of installation is characterized in that it comprises a step of superimposition of said front element with said rear part, said step of superimposition being performed following of a step of installation of a photoconverting element into said rear part, and wherein said step of superimposition is performed following of an application of a glue in a peripheric recess realized on a portion of peripheral edge of the said rear part, said portion of peripheral edge being parallel to the plane on which lays said front element, and is furthermore realized by making the peripheral recess filled with glue correspond with a peripheral window of control which is present along a portion to which proximal to the perimeter of said front element.

Advantageously, said method comprises a preventive step of realizing of a serigraphy and/or painting and/or covering of the said portion to which proximal al perimeter of said front element, wherein is realized said peripheral window in such a way to include said peripheral window in the serigraphed zone and/or painted and/or covered.

Advantageously, said step of apposition of a glue in said recess is performed by pouring or injecting a glue having a color which contrasts with the color present on said portion to which proximal to the perimeter of said front element. Advantageously, said method comprises furthermore a step of verification of a continuity of presence of contrast of color between said peripheral window and said portion to which proximal al perimeter of said front element, said step of verification of said continuity of presence of contrast of color representing a test of verification of insulation and correct sealing between said front element and the rear part of said solar panel.

Advantageously, said method comprises a step of realization of said serigraphy and/or painting and/or covering of said perimetral portion of said front element comprises a step of creation of an internal discontinuous profile, realized at least in correspondence of the principal sides of said front element by means of a liner juxtaposition of a sequence of a first tract convex wherein said serigraphed perimetral and/or painted and/or covered portion extends principally towards an inner zone of said front element and a second concave tract, wherein said serigraphed perimetral and/or painted and/or covered portion extends less towards said inner zone.

Advantageously, said method comprises furthermore a step of realization of angular portions of linking which are inclined and realized in correspondence of the said serigraphed perimetral and/or painted and/or covered portion.

### Description of the figures

The invention will be now described in one or more preferred and non-limiting embodiments with reference to the annexed figures wherein:

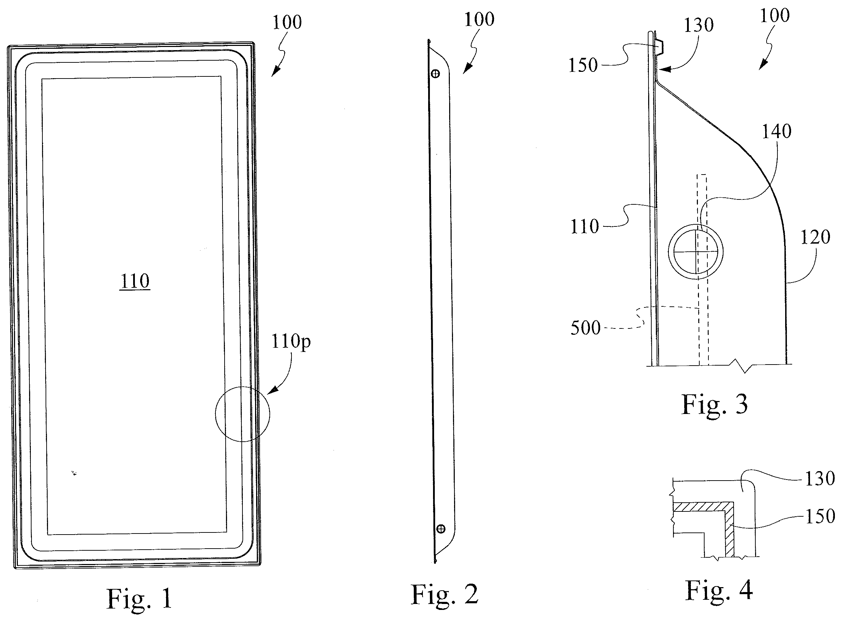

- figure 1 shows a front view of a solar panel object of the present invention;
- figure 2 shows a lateral view of the solar panel of figure 1;
- figure 3 shows a detail in section of the said lateral view;
- figure 4 shows a detail in plan view of a rear part of the panel object of the present invention;
- figure 5 shows a front view of the solar panel object of the present invention from which is deduced a discontinuous serigraphy that allows for maximizing the radiation of the photo converter arranged below thereto;
- figure 6 shows a detail of the said serigraphy;

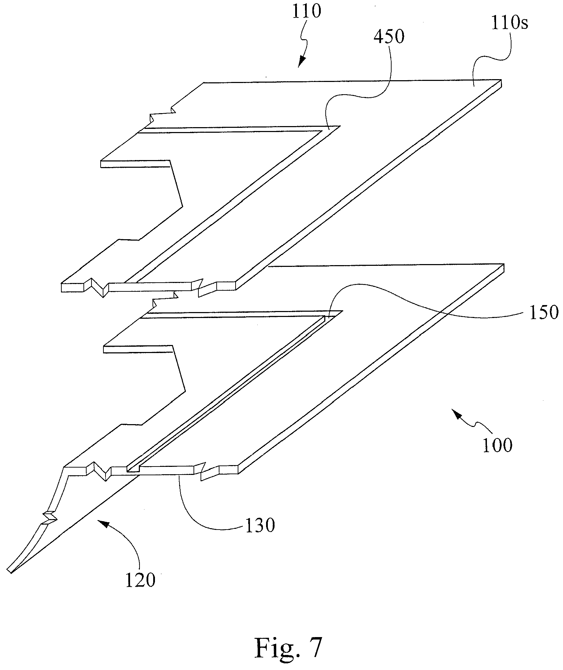

- figure 7 shows a tridimensional partial view of the panel object of the present invention, in exploded view;
figure 8 and figure 9 show two schematic representations of illumination of a photoconverting element in two different portions of panel, represented by the lines III-III and IV-IV.

### Detailed description of the invention

With reference to the annexed figures, with the reference number 100, is indicated in its complex a solar panel.

The solar panel 100 is suitable for being installed on houses, and in particular in correspondence of roofs or other portions of buildings easiliy radiable by sun to the end of being capable of producing hot water and/or electric energy through a photoconverting element 500, that can be realized by a serpentine in which the water flow or still being a photovoltaic panel. Preferably even though in a non-limiting extent, the solar panel 100 object of the present invention is realized in a rectangular shape.

In detail the solar panel 100 object of the present invention comprises a front planar element 110, realized preferably but in a non-limiting extent by means of a sheet of glass for example stratified, and a rear part 120 with a shape of a tank, that presents a concavity suitable for containing therein said photo converting element 500, in such a way that it does not protrude in the sense of the height respective to an upper edge of the rear part 120.

In contrast, the photoconverting element 120 is contained inside the tank realized by the rear part laying at a predefined height respective to the edge of the same. Said height, preferably but in a non-limiting extent is equal to 2 cm, and is calculated in such a way to leave the passage of the air sufficient for the mounting and the partial cooling of the same when the panel is assembled.

In fact, the front planar element 110 and the rear part 120 are assembled so as to be superimposed one with respect to the other, enclosing the photo converting element 500 in an environment sealed from the outer environment and communicating with this last only through feeding connectors 140 arranged laterally on the rear part.

The rear part 120 presents a edge 130 planar, that is designed for laying on a plane parallel to the plane on which lays the front element 110. Said edge 130 planar realizes therefore a portion of edge which is planar and peripheric of the rear part 120 of the solar panel 100 suitable for allowing the coupling air and liquid tight between the front element 110 and the rear part 120 by means of a plane-plane adhesion that will be better described in the portion of description that follows.

In detail in said edge 130 planar is realized a recess 150. Said recess, in a embodiment preferred and non-limiting of the solar panel 100 object of the present invention extends along all the perimeter of the edge 130, and is arranged to a predefined distance respective to the outer ends of the portion of edge 130 so that to result parallel to the sides of the solar panel 100.

The most part of the front element 110 is transparent, to the end of allowing the solar rays to incide on the underlying photo converting element 500 for transforming the solar radiation in another form of energy (heat or electric current).

In detail, anyway, not all the front element 110 is transparent. Precisely, due to of the coupling of this last with the rear part 120, that as will be better described hereinafter is realized by means of gluing, the front element 110 presents a perimetral portion 110p which is colored and not transparent, to the end of covering from the sign the anti aesthetic aspect brought by gluing. Therefore, the perimetral portion 110p, that extends towards the inner part of the front element 110 for a predetermined transversal extension along the sides, is characterized by a serigraphy or painting or covering, that preferably but in a non-limiting extent are realized on the rear face of the front element 110, the face that in use is then coupled with the rear part 120 of the panel itself.

In detail, said serigraphy or painting or covering is realized with a dark colour. Anyway said feature shall not be intended as limitative. In correspondence of the said serigraphy or painting or covering, is realized with a peripheral window 450, that has a double function:
- allowing the verification of continuity of the gluing between the front element and the rear part of the solar panel 100; and
- providing an aesthetic apsect of the frame to the element itself.

For said reason, the peripheral window 450 is realized either inside the colored perimetral portion 110p , and then inside the serigraphy/painting or covering, or in substantial proximity of the same, laying then slightly more inside respective to said perimetral portion 110p. In detail, the annexed figures refer to an embodiment in which the peripheral window 450 is included in the serigraphed zone. Consequently in correspondence of the peripheral window 450, the serigraphy/painting/covering of the front element 110 misses, leaving therefore exposed the transparency of the glass. Precisely for said reason for peripheral window, for the purposes of the present invention has to be intended a peripheral region, surrounded on the two left and right sides by areas of the glass which are opaque, wherein it is not visible what is placed beyond the sheet of glass or front planar element 110.

In any case the peripheral window 450, that extends parallel to the four sides of the solar panel so as to form preferably even though in a non-limiting extent a rectangular frame, is at a distance from said edge thereof so as to result in exact superimposition with the recess 150 which is present on the portion of edge 130 planar of the rear part of the panel.

Of consequence, by observing the solar panel frontally it is possible to see said recess through the peripheral window 450.

As it will be better described, therefore the perihperal window represents a means of visualization of correctness and completeness of coupling physical between said rear part and the front planar element capable of speeding and certifying the correct sealing between the two elements. To which, through the combination provided by the peripheral window 450 and by the portions of serigraphy which are lateral thereto, it is possible to conceal a significant part of the area of gluing and the related surrounding technical areas, leaving anyway visible a portion of reduced thickness of pleasant aestethic aspect that combines advantageously with this the effect of evaluation of the efficiency and correctness of gluing.

Furthermore, the front element 110 presents a peripheral serigraphy/painting or covering of a peculiar aspect. In detail, the serigraphy/painting/covering of the peripheral portion 110p of the front element 110 assumes a discontinuous profile.

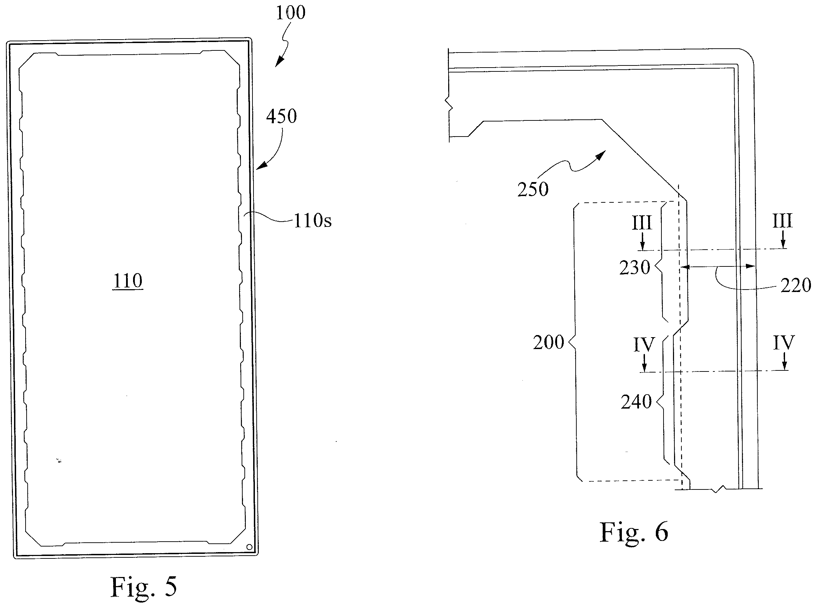

As underlined in the figure 5 and 6 in particular, the profile of the serigraphy/painting/covering, is realized at least in correspondence of the principal sides of said front element 110 by linearly juxtaposing a sequence 200 of discontinuous tracts of which a first tract 240 results convex and oriented verso the center and a second tract 230, juxtaposed to the first tract 230, results instead concave.

Therefore, detected an axis X median of the distance from the edge, an axis which is parallel to the side, the first convex tracts 240 lay beyond said median axis X towards the inner part or center of the front element 110 and the second concave tracts rest instead on the opposite part of said axis.

In detail, furthermore, each tract comprises a rectilinear portion which is parallel to the side and a portion inclined respective to the side of junction with the tract immediately subsequent.

In correspondence of the edges, the perimetral portion that is serigraphed/painted or covered presents furthermore of the angular portions of linking inclined respective to said sides, preferably but in a non-limiting extent with an inclination equal to 45°.

As previously mentioned in the phase of installation the solar panel 100 object of the present invention first of all sees a first step of deposition of the photo converting element 500 inside the tank realized in the rear part 130.

Following of the deposition, said photoconverting element 500 is conveniently fixed by means of mechanic fixing means of a known type.

In parallel or previously, the sheet of glass that realizes the front element 110 is serigraphed or painted or covered in correspondence of the perimetral portion 110p, with the detail of leaving the zone that will be object of the peripheral window 450 without serigraphy or paint or anyway covering.

Subsequently, with the serigraphy realized, as already mentioned preferably and in a non-limiting extent on the internal face of the front element 110, is performed a phase of deposition or injection of the glue into the recess 150. Said phase of deposition shall bring the most possible uniform deposition of said glue, that shall possess a contrasting color with respect to that of the serigraphy/painting/covering of the perimetral portion 110p so as to advantageously realize both the aesthetic effect and the effect of visual verification of correctness of mounting of the front element with the rear part of the solar panel 100 object of the present invention.

In particular, the amount of glue that is necessary to inject or anyway introduce into the recess 150 is such as to allow not only the filling thereof but also a slight overflow, so that the glue itself, following of the step of superimposition of the front element 110 on the rear part 120, spreads out in correspondence of the portion of edge 130 co-planar with the front element 110 realizing an optimal sealing.

The visual uniformity of the contrast of color between the peripheral window 450 and the serigraphy allows the immediate detection of if the mounting is correctly performed and therefore if actually the photoconverting element 500 is isolated from the external environment.

Advantageously the uniformity of color can also be identified through processes of analysis of an electronic type performed for example and in a non-limiting extent by means of cameras connected to electronic computers.

Through the serigraphy with discontinuous profile it is possible to realize an increment of illumination of the extremity portions of the photoconverting element 500 in case of irradiation with non-orthogonal incidence.

In fact from one side the existence of a serigraphy partially covering the extremity portions of said photoconverting element 500 is necessary due to the type of mounting.

True as well is that the photoconverting element 500, not being co-planar and neither co-planar with the sustaining plane of the front element 110, is subject to its ends to the parallax of projection of the solar ray.

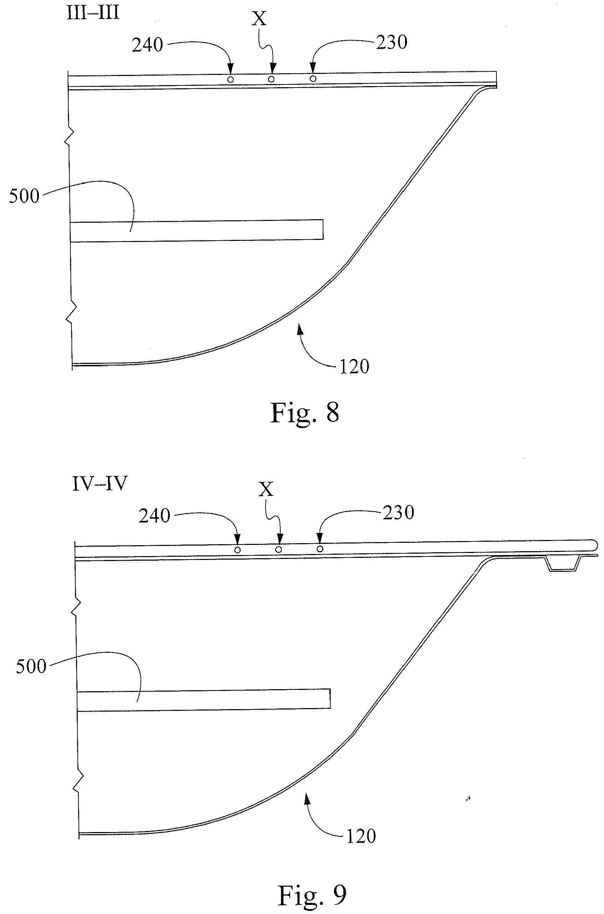

As underlined in the figure 8 and 9, in the portions 230 wherein the ray incises with a high incidence (also up to 45°) respective to the vertical, there is a significant increase of the underlying area that can be illuminated, without omitting the covering effect of the visibility of the zone of separation between the photo converting element 500 and the tank that is anyway partially guaranteed by the portions 240 of profile that are convex towards the inner part of the front element. The applicant has observed that a proportion of equal length between the first concave parts and the second convex parts represents the optimum from the point of view of the increment of peripheral illumination of the photo converting element 500 in relation to the concealing coefficient of said zone of separation. Anyway proportions between the 40% and the 60% between the length of the first concave parts and the second convex parts are anyway acceptable.

The advantages of the solar panel object of the present invention are clear in view of the preceding description. It allows in phase of mounting of speeding and optimizing a quality control of the insulation and gluing of the front element on the rear part; on great numbers of production this allows a significant saving of time and man hours with an increment of the guarantee of operation of the panel itself especially in long time. In addition, when the contrast of color between the window and the serigraphy is continuous and constant, a correct gluing can be desumed and therefore it can be desumed a minimum risk of detachment of the front element.

Through the assembly formed by the serigraphy with discontinuous internal profile and the peripheral window a particularly pleasant aesthetic effect is obtained.

It is finally clear that to the object of the present invention can be applied additions, modifications or variants being obvious for a skilled person, without for this departing from the scope of protection provided by the annexed claims.

## Claims

1. Solar panel (100), comprising a front planar element (110) at least partially transparent, coupled to a second concave rear part (120) realizing a tank suitable for containing a photo converting element (500) suitable for transform the energy coming from the solar radiation when passing through said front planar element (110) and incising on a sensitive surface of said photo converting element (500), in another from of energy;
said solar panel (100) is **characterized in that** it comprises a peripheral window (450), at least partially developing along a portion to which proximal to the perimeter of said front element (110), said peripheral window realizing a means of visualization of correctness and completeness of coupling physical between said rear concave part (120) and said front planar element (110); said second rear part (120) comprises a portion of perimetral edge planar (130) and a recess (150) developing along the perimeter of the said portion of perimetral edge; said recess (150) being filled with a fluid glue defining a contrast of color with said perimetral portion serigraphed (110p) by means of appearing through said perimetral window (450).

2. Solar panel according to claim 1, **characterized in that** said peripheral window (450) is realized into or in proximity of a perimetral portion (100p) serigraphed and/or painted and/or covered of said front element (110).

3. Solar panel according to claim 2, wherein said peripheral window (450) is transparent and defines said correctness and completeness of coupling physical between said concave rear part (120) and said front planar element (110) by means of contrast of color.

4. Solar panel according to any of the preceding claims, wherein said portion of perimetral edge planar (130) is in use arranged on a plane which is parallel to the plane along which said front element (110) lays.

5. Solar panel according to claim 4, wherein said recess (120) is arranged at a distance from the end (120e) of the said rear part (120) equal to distance to which said peripheral window is arranged respective to the extremity of the front element, said peripheral window (450) resulting superimposed in use to said recess (150).

6. Solar panel according to any of the preceding claims, wherein said perimetral portion (110p) serigraphed and/or painted and/or covered presents a discontinuous internal profile, realized at least in correspondence of the principal sides of said front element (110) by means of a linear juxtaposition of a sequence (200) of a first convex tract (230) wherein said perimetral portion serigraphed and/or painted and/or covered extends principally towards a inner zone of said front element (110) and a second tract concave (240), wherein said perimetral portion serigraphed and/or painted and/or covered extends less towards said inner zone.

7. Solar panel according to any of the preceding claims, **characterized in that** said perimetral portion (110p) serigraphed and/or painted and/or covered presents angular portions (250) of linking inclined respective to the sides of said front element (110).

8. Method of production and installation of a solar panel (100) with verification of correct coupling between an own front element (110) and an own rear part (120); said method of production and installation is **characterized in that** it comprises a step of superimposition of said front element (120) with said rear part (130), said step of superimposition being performed following of a step of installation of a photoconverting element (500) into said rear part (120), and wherein said step of superimposition is performed following of a of a glue in a peripheric recess (150) realized on a portion of peripheral edge (130) of the said rear part (120), said portion of peripheral edge being parallel to the plane on which lays said front element (110), and is furthermore realized making the peripheric recess (140) filled with glue correspond with a peripheral window (450) of control which is present along a portion to which proximal al perimeter (110p) of said front element (110).

9. Method according to claim 8, comprising a preventive step of realization of a serigraphy and/or painting and/or covering (110s) of the said portion to which proximal al perimeter (110p) of said front element (110), wherein is realized said peripheral window (450) in such a way to include said peripheral window (450) in the serigraphed and/or painted and/or covered (110s) zone.

10. Method according to claim 8 or the claim 9, wherein said step of apposition of a glue in said recess (140) is performed pouring or injecting a glue having a color contrasting with the color which is present on said portion proximal to the perimeter (110p) of said front element (110).

11. Method according to any of the claims 8-10, comprising furthermore a step of verification of a continuity of presence of contrast of color between said peripheral window (450) and said portion to which proximal to the perimeter of said front element (110), said step of verification of said continuity of presence of contrast of color representing a test of verification of insulation and correct sealing between said front element and the rear part of said solar panel.

12. Method according to any of the preceding claims 8-11, comprising furthermore a step of realization of said serigraphy and/or painting and/or covering (110s) of said perimetral portion (110p) of said front element (110) comprises a step of creation of a discontinuous internal profile per said serigraphy and/or painting and/or covering, wherein said discontinuous internal profile is realized at least in correspondence of the principal sides of said front element by means of a linear juxtaposition of a sequence (200) of a first tract (230) convex wherein said serigraphed and/or painted and/or covered perimetral portion extends principally towards a inner zone of said front element (110) and a second concave tract (240), wherein said perimetral portion serigraphed and/or painted and/or covered extends less towards said inner zone.

13. Method according to any of the preceding claims, **characterized in that** it comprises furthermore a step of realization of angular portions (250) of linking inclined and realized in correspondence of the said serigraphed and/or painted and/or covered perimetral portion.
